Europäisches Patentamt

European Patent Office

Office européen des brevets

(11) Publication number: **0 242 041**
**A1**

# EUROPEAN PATENT APPLICATION

(21) Application number: 87301999.6

(51) Int. Cl.⁴: **B60D 1/00**

(22) Date of filing: 09.03.87

(30) Priority: **10.03.86 GB 8605798**

(43) Date of publication of application:
**21.10.87 Bulletin 87/43**

(84) Designated Contracting States:
**AT BE CH DE ES FR GB GR IT LI LU NL SE**

(71) Applicant: **KING TRAILERS LIMITED Riverside Market Harborough Leicestershire LE16 7PX(GB)**

(72) Inventor: **Anderson, Geoffrey Hallwood House Medbourne Road Hallaton Market Harborough Leicestershire(GB)**
Inventor: **Smith, Trevor Orchard House Naseby Road Clipston Market Harborough Leicestershire LE169RZ(GB)**
Inventor: **Billson, Paul 6 Highcroft Avenue Oadby Leicestershire(GB)**
Inventor: **Smith, Richard 96 Glenn Road Oadby Leicestershire(GB)**

(74) Representative: **Allen, Oliver John Richard et al Lloyd Wise, Tregear & Co. Norman House 105-109 Strand London, WC2R 0AE(GB)**

(54) Draw bar.

(57) A towing device (12) comprising a first towing device member in the form of a triangularly shaped housing (14) capable of being pivotally mounted on a trailer (10) and a second towing device member in the form of a T-shaped bar (18) capable of being connected to a towing vehicle, the first and second members co-operating together and being capable, initially, of relative movement one to the other.

Fig.1.

# DRAW BAR

This invention relates to a towing device for a trailer, and in particular a drawbar unit.

Known drawbars are usually quite difficult to connect to a towing vehicle in adverse conditions, especially when the trailer is immovable.

In accordance with the invention, a towing device comprises a first towing device member capable of being pivotally mounted to a trailer and a second towing device member capable of being connected to a towing vehicle, the first and second members co-operating together and capable of relative movement one to the other.

Such an arrangement provides a simple and versatile towing device which can be easily connected to and disconnected from a towing vehicle.

Preferably, one end of the second member is contained and trapped within the first member, so as to allow relative movement therebetween but also to allow engagement thereof. In particular, the second member may be a basically T-shaped bar member, while the first member may be a hollow basically triangular shaped housing member.

The first and second members are movable relative to each other suitably in the sense that the second member may move either side to side of the first member and/or outwardly and inwardly of the first member.

The towing device is preferably counterbalanced in a vertical plane, and the counterbalancing is such that the towing device suitably and naturally rests in a down condition on the ground.

Advantageously, the towing device is counterbalanced to give preferably a maximum lifting load of 15 kg at the connection of the second member to the towing vehicle.

The inside of the first "housing" member and the outside of the second "bar" member are suitably shaped so that when such engage, the second member is caused to move eventually to a pre-determined position in the first member.

A locking mechanism is preferably provided to lock the second member to the first member when relative movement therebetween is finished. The mechanism is suitably self-locking when the second member has reached the pre-determined position in the first member.

The invention will now be described by way of example, with reference to the accompanying drawings, in which,

Figure I shows a plan view of a trailer having a towing device in accordance with the invention,

Figure 2 shows a side view of the trailer and towing device of Figure I,

Figure 3 shows an enlarged cross-sectional side view of a lock mechanism in an uncoupled and unlocked position, for use in conjunction with the towing device of Figure I,

Figure 4 shows an enlarged cross-sectional side view of the lock mechanism of Figure 3 in a coupled and locked position, and

Figure 5 shows an enlarged cross-sectional side view of an alternative lock mechanism in an uncoupled and unlocked position.

In Figures I and 2, a trailer I0 is shown with a towing device I2 in the form of a drawbar unit attached at the front end thereof.

The towing device I2 consists of two separate but co-operating towing device members, a hollow housing member I4 pivotally mounted (see I6) to the trailer, and a bar member I8 which is capable of being connected via a towing eye I9 to a towing vehicle. The bar member I8 is basically T-shaped, the end portion 20 thereof being contained and trapped within the hollow basically triangular shaped housing member I4, for relative movement therewith, while the trunk portion 2I thereof extends out of an opening 23 provided at the front of the housing member I4.

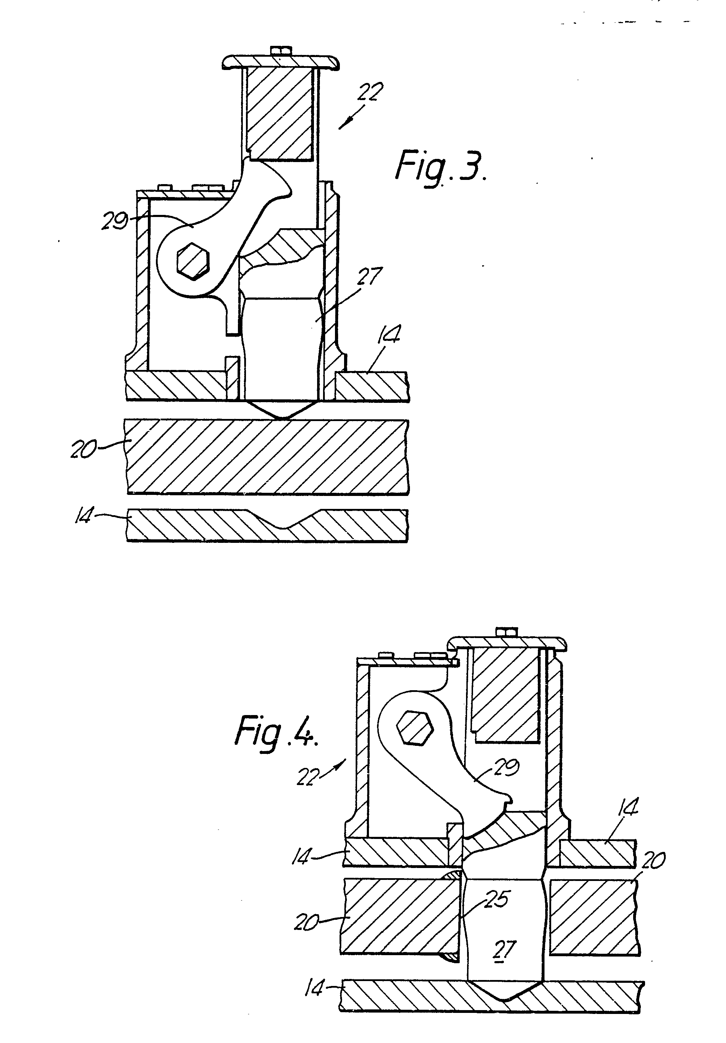

A self-locking mechanism 22 is provided to lock the end portion 20 of the bar member I8 when in a pre-determined position, to the housing member I4 (see Figures 3 and 4). During actual physical connection of the bar member I8 to a towing vehicle by an operator, the locking mechanism 22 is in an uncoupled and unlocked position such that the end portion 20 of the bar member I8 is movable within the confines of the housing member I4. This facility allows firstly side to side movement of the bar member I8 relative to the housing member I4, and secondly outward and inward movement (i.e. extension and retraction) of the bar member I8 relative to the housing member I4. In particular, this allows the bar member I8 to be physically connected by an operator to a vehicle within a large "pick up" horizontal plane area (see shaded portion of Figure I).

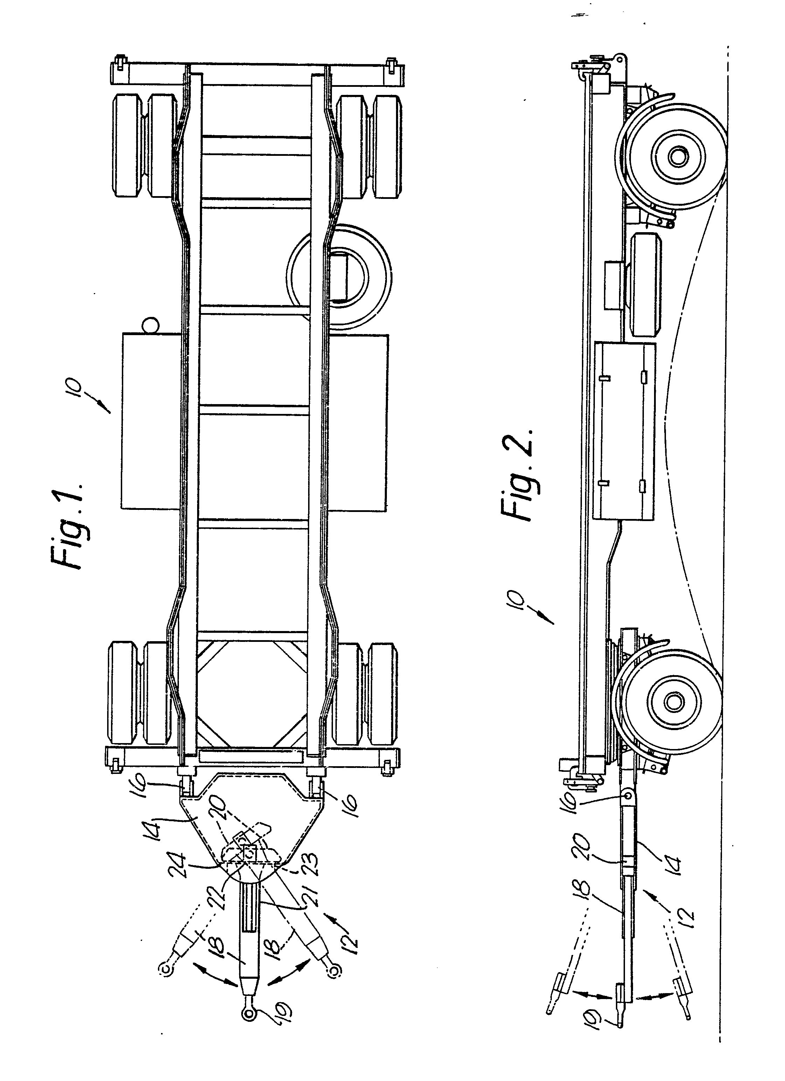

The towing device I2 is counterbalanced to give preferably a maximum lifting load of I5 kg at the towing eye I9. The counterbalancing is also such that the towing device I2 naturally rests in a down condition on the ground. The counterbalancing facility allows connection of the bar member I8 to a vehicle within a large "pick up" vertical plane area (see shaded portion of Figure 2).

All in all, the towing device I2 can be physically connected to the towing vehicle anywhere within a large area of misalignment.

After the bar member I8 has been physically connected to a vehicle, the bar member I8 is in a displaced position, within the housing member I4, wherein the end portion 20 is spaced from the opening 23. As the vehicle is being driven off, the unaligned but connected trailer creates steering forces to naturally align the trailer with the towing vehicle, since the exterior of one side of the end portion 20 of the bar member I8 will eventually contact and pivot against a ledge 24 provided at the opening 23 and inside the housing member I4- (see dotted outline in figure I), causing the other side of the end portion 20 to move to an aligned and pre-determined position at the opening 23(see undotted outline in Figure I).

In this aligned and pre-determined position, the self-locking mechanism operates to rigidly lock the bar member I8 to the housing member I4 since a hole 25 provided in the end portion 20 of the bar member I8 becomes aligned with a bar member 27 of the locking mechanism 22. The bar member 27 is held in its uncoupled position within the locking mechanism 22 by a retaining member 29 as shown in Figure 3. The end portion 20 of the bar member I8 has a slightly increased diameter immediately adjacent the hole 25, such that as it moves to the aligned and pre-determined position the bar member 27 is raised, thereby freeing it from the retaining member 29. Locking is thus achieved mechanically, however unlocking is only achieved by an operator using an uncoupling handle attached to retaining member 29.

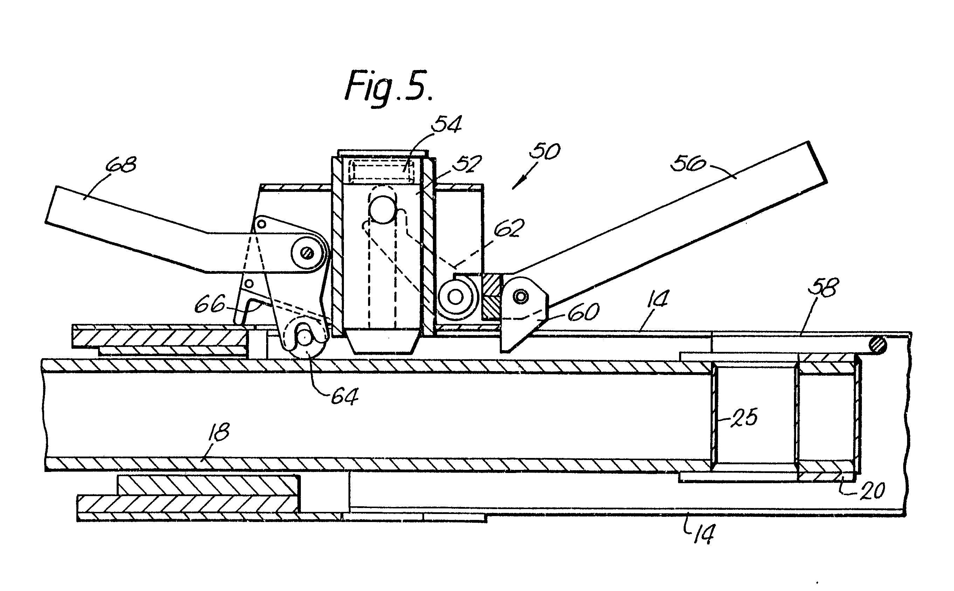

In Figure 5, an alternative locking mechanism 50 is shown, wherein a locking pin 52 is biased by a spring 54. Locking is achieved mechanically in a similar fashion to locking mechanism 22, and unlocking is achieved by an operator using an uncoupling handle 56. The locking pin is released when the U-shaped bar 58 forces fixed pivot member 60 to move upwards thereby enabling the locking pin to move out of a groove in the retaining pin 62.

Stop means in the form of a roller assembly 64 are also provided, which wedge against the bar member I8 and housing member I4 (via an inclined member 66), to prevent relative movement therebetween in certain critical instances, for example when the bar member I8 is coupled to a towing vehicle parked facing down an incline, and trailer parking brakes are released. Once the trailer has been secured the stop means are released by use of a control lever 68. Although the stop means illustrated in Figure 5 rely on a friction system a ratchet device may be equally well employed.

The towing device I0 can be used quickly and simply by a single operator in a wide range of adverse conditions such as off road / heavy duty applications. Such is particularly useful in conjunction with Load Handling Systems where the trailer has to be placed close to the towing vehicle when unloading.

## Claims

I. A towing device (I2) comprising a first towing device member (I4) capable of being pivotally mounted to a trailer and a second towing device member (I8) capable of being connected to a towing vehicle, the first and second members co-operating together and capable initially of relative movement one to the other.

2. A towing device as claimed in Claim I wherein one end (20) of the second member is contained and trapped within the first member.

3. A towing device as claimed in either claim I or 2 wherein the second member is a basically T-shaped bar member (I8), while the first member is a hollow basically triangular shaped housing member (I4).

4. A towing device as claimed in any preceding claim wherein the first and second members are movable relative to each other in the sense that the second member moves either side to side of the first member and/or outwardly and inwardly of the first member.

5. A towing device as claimed in any preceding claim which is counterbalanced in a vertical plane, and wherein the counterbalancing is such that the towing device (I2) naturally rests in a down condition on the ground.

6. A towing device as claimed in any preceding claim wherein the inside of the first member and the outside of the second member are shaped so that when such engage, the second member is caused to move eventually to a pre-determined position in the first member.

7. A towing device as claimed in any preceding claim wherein a locking mechanism (22 or 50) is provided to lock the second member to the first member after initial relative movement.

8. A towing device as claimed in claim 7 as dependent on claim 6 wherein the locking mechanism is suitably self-locking when the second member has reached the pre-determined position in the first member.

9. A towing device as claimed in any preceding claim wherein stop means (64) are provided to prevent relative movement between the first and second towing device members in certain critical instances.

10. A towing device as claimed in claim 9 wherein the stop means comprises a roller assembly (64) adapted to wedge between the first and second towing device members.

11. A towing device as claimed in claim 9 wherein the stop means comprises a ratchet device.

12. A towing device as claimed in any one of claims 9 to 11 wherein control lever means (68) are provided to disengage the stop means.

13. A trailer having a towing device as claimed in any preceding claim.

# Fig.1.

# Fig.2.

0 242 041

_Fig.3._

_Fig.4._

# Fig.5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | CA-A-1 142 199  (A. WEBER)  * Whole document * | 1-2,7, 13 | B 60 D    1/00 |
| A | | 3,5 | |
| X | US-A-2 788 226  (F. MALONE)  * Whole document * | 1-2,7, 13 | |
| A | US-A-2 051 186  (CATERPILLAR TRACTOR CO.)  * Whole document * | 1-4,6, 13 | |
| A | DE-C- 921 073  (W. PETERS)  * Claim; figures 1-2 * | 1,7-8 | |
| A | DE-A-3 016 247  (CRAMER KUPPLUNG GmbH & CO KG)  * Figures 2-6 * | 1,7-8 | **TECHNICAL FIELDS SEARCHED (Int. Cl.4)** <br> B 60 D <br> B 66 C <br> B 66 F |
| A | DE-B-1 157 932  (H. SCHOMÄCKER & CO.)  * Column 1, lines 1-7; figures 1-5 * | 1,9 | |
| A | DE-A-2 653 012  (O. NUSSBAUM KG)  * Claim 1; figures 1-2 * | 10 | |

--- -/-

The present search report has been drawn up for all claims

| Place of search | Date of completion of the search | Examiner |
|---|---|---|
| THE HAGUE | 14-07-1987 | LINTZ C.H. |

European Patent
Office

**EUROPEAN SEARCH REPORT**

Application number

EP 87 30 1999

Page 2

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 046 019 (A. PHILLIPS)<br>* Column 3, lines 31-56; figures 2,4 * | 11,12 | |
| | --- | | |
| A | DE-A-2 018 820 (POTAIN POCLAIN MATERIEL)<br>* Page 4, line 6 - page 5, line 11; figure 3 * | 7-8 | |
| | ----- | | |

TECHNICAL FIELDS
SEARCHED (Int. Cl.4)

The present search report has been drawn up for all claims

| Place of search | Date of completion of the search | Examiner |
|---|---|---|
| THE HAGUE | 14-07-1987 | LINTZ C.H. |